(19) Europäisches Patentamt

European Patent Office

Office européen des brevets

(11) EP 0 951 148 A2

(12) EUROPEAN PATENT APPLICATION

(43) Date of publication:
20.10.1999 Bulletin 1999/42

(51) Int. Cl.$^6$: **H04B 1/707**, H04B 7/02

(21) Application number: 99106145.8

(22) Date of filing: 07.04.1999

(84) Designated Contracting States:
AT BE CH CY DE DK ES FI FR GB GR IE IT LI LU
MC NL PT SE
Designated Extension States:
AL LT LV MK RO SI

(30) Priority: 14.04.1998 JP 10314098

(71) Applicant:
MATSUSHITA ELECTRIC INDUSTRIAL CO., LTD.
Kadoma-shi, Osaka 571-8501 (JP)

(72) Inventor: Sato, Takaaki
Yokohama-shi, Kanagawa 233-0001 (JP)

(74) Representative:
Grünecker, Kinkeldey,
Stockmair & Schwanhäusser
Anwaltssozietät
Maximilianstrasse 58
80538 München (DE)

(54) **Synchronization apparatus and method for direct sequence spread spectrum communication**

(57) A detection range for path phase is set in a range of a search window including a path phase instructed by search window position setting section 208. It is thereby possible to as much as possible avoid selecting paths received from different mobile stations.

## FIG. 5

## Description

BACKGROUND OF THE INVENTION

Field of the Invention

The present invention relates to a synchronization processing apparatus in a receiver of a radio base station applying a CDMA (Code Division Multiple Access) system as a radio access system in a mobile communication system such as a car telephone and a portable telephone.

Description of the Related Art

In a mobile communication system, a mobile station and a radio base station apparatus transmit and receive control data and user data via radio link. Especially, when the mobile station transmits control data including a call request to a network side including the radio base station apparatus, the mobile station generally uses a common physical channel that is used commonly by a plurality of users. Since such a channel becomes a random access channel by a plurality of users, it is necessary for the radio base station apparatus to perform receiving processing of burst signals by random access from a plurality of users individually.

In the mobile communication system, a mobile station acquires frame synchronization at a frame timing of a base station generally by receiving a perch channel signal that is a forward link signal transmitted from the base station.

In a CDMA system in which a channel over radio link is recognized by a spreading code, a radio base station usually performs RAKE receiving in which mobile station transmitted radio signals are received as a plurality of propagation paths to combine. As disclosed in Japanese Unexamined Patent Publication NO.8-181636, one of already-known configurations of a CDMA receiver for performing RAKE receiving comprises a synchronization processing section for performing search processing to detect a phase of a spreading code used in received spread data and a RAKE receiving section, based on the phases of spreading codes corresponding to a plurality of paths detected at the synchronization processing section, for despreading signals of a plurality of paths individually, correcting phases and performing a predetermined weighting to combine.

In a method applied for random access channel in a CDMA mobile communication system in order to facilitate initial synchronization in a burst receiving at a base station, a mobile station performs spreading by adjusting a spreading code phase (shift register initial value of a spreading code generator) to a frame timing synchronized with the base station to transmit a burst signal.

In such a method, when a mobile station transmits a burst signal so that a random access timing of the mobile station is synchronized with a frame timing of a base station in order to enable the base station to perform a path search in a range corresponding to a propagation delay time difference of communications between the base station and the mobile station to detect a path phase from the mobile station, it is possible for the base station to perform a phase adjusting (chip synchronization) of a spreading code to acquire frame synchronization.

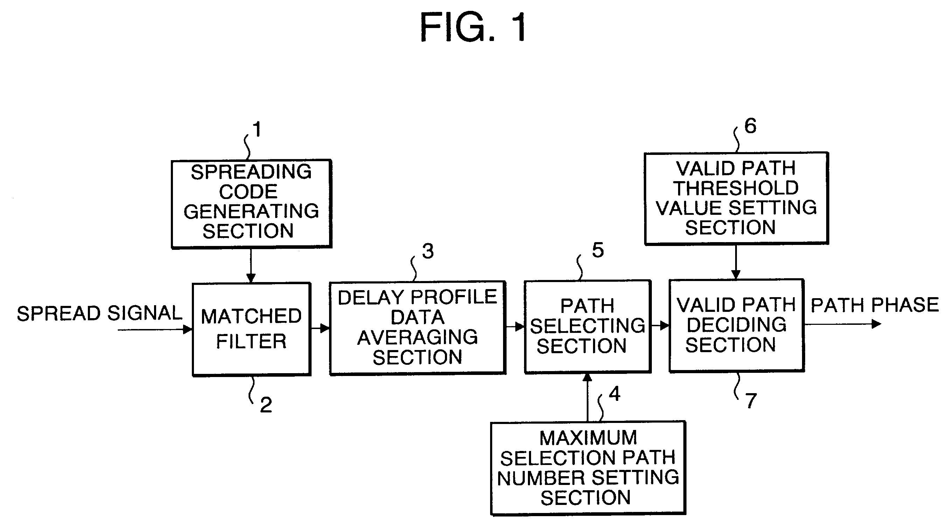

FIG.1 illustrates a block configuration of a conventional synchronization processing apparatus in a CDMA receiver. In FIG.1, the principal part of the synchronization processing apparatus is composed of spreading code generating section 1 for generating a spreading code, matched filter 2 for performing correlation processing of received spread data with the spreading code output from spreading code generating section 1 while varying a phase to output the correlation value in a time sequence, delay profile data averaging section 3 for performing averaging processing on outputs from matched filter 2 over a predetermined interval to generate delay profile data, maximum selection path number setting section 4 for setting the upper limit of the number of paths which the synchronization processing apparatus can select, path selecting section 5 for selecting maximum N numbers of paths in order of the higher received power from paths with maximum received power corresponding to N numbers of paths assigned by maximum selection path number setting section 4 from data output from delay profile data averaging section 3, valid path threshold value setting section 6 for setting a threshold value to limit paths in obtaining candidate paths to be subjected to RAKE receiving, and valid path deciding section 7 for selecting only the path more than the threshold value set by valid path threshold value setting section 4 from among paths selected by path selecting section 5.

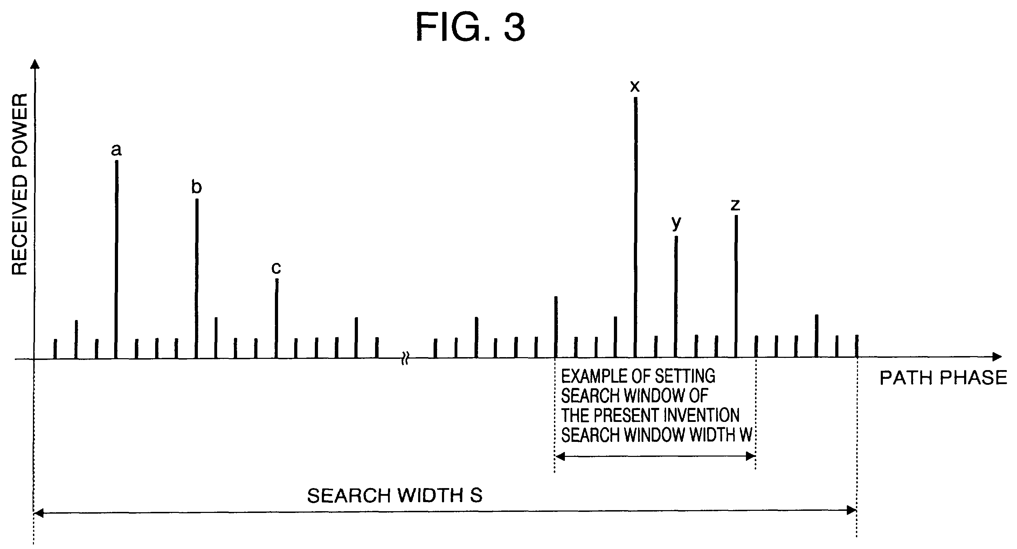

The operation of the synchronization processing apparatus in the conventional technique will be described next using FIG.1. The operation example described herein refers to the case of detecting as a maximum P-MAX numbers of path phases of paths whose received power levels exceed Pt (threshold value) in a range of search width S illustrated in FIG.3. When the search width is assumed as A chips, a value of S is A×2 samples in the case of operating the synchronization processing apparatus at an oversampling rate which is twice of a chip rate.

Since the same random access channel is used by a plurality of mobile stations, every mobile station uses the predetermined same spreading code. A type of spreading code used in the random access channel is set at spreading code generating section 1, maximum selection path number P-MAX is set at maximum selection path number setting section 4, and valid path threshold value Pt is set at valid path threshold value setting section 6. As a maximum selection path number, the number of a plurality of correlators comprised in the RAKE receiving section is usually set. As a valid path threshold value, a received power level which enables a decision to be performed as a path with received power level high enough to a noise level is set.

Spreading code generating section 1 generates spreading codes in a time sequence to load at matched filter 2. In order to achieve a search width corresponding to 256 chips (62.5 μs) with respect to a burst signal with a symbol rate of random access channel of 16ksymbols/sec in a CDMA system with a chip rate of spreading code of 4.096MHz, a spreading code may be loaded at intervals of 62.5μs using a matched filter of 512 (256 × 2) taps in the case of operating the synchronization processing apparatus by twice-oversampling. This operation is continued until the data necessary for averaging processing of delay profile data is acquired.

Matched filter 2 outputs correlation values of spread data input to the matched filter with spreading codes loaded at the matched filter in a time sequence varying a phase of the spreading code.

Delay profile data averaging section 3 performs averaging of delay profile data by integrating delay profile with an A-chip width output from matched filter 2 over a long enough interval. It is possible to reduce a noise component of the matched filter output data to improve a S/N ratio by this averaging processing. The delay profile data subjected to the averaging processing is assumed as PD[0] to PD[S]( S=A × 2:twice-oversamplling ).

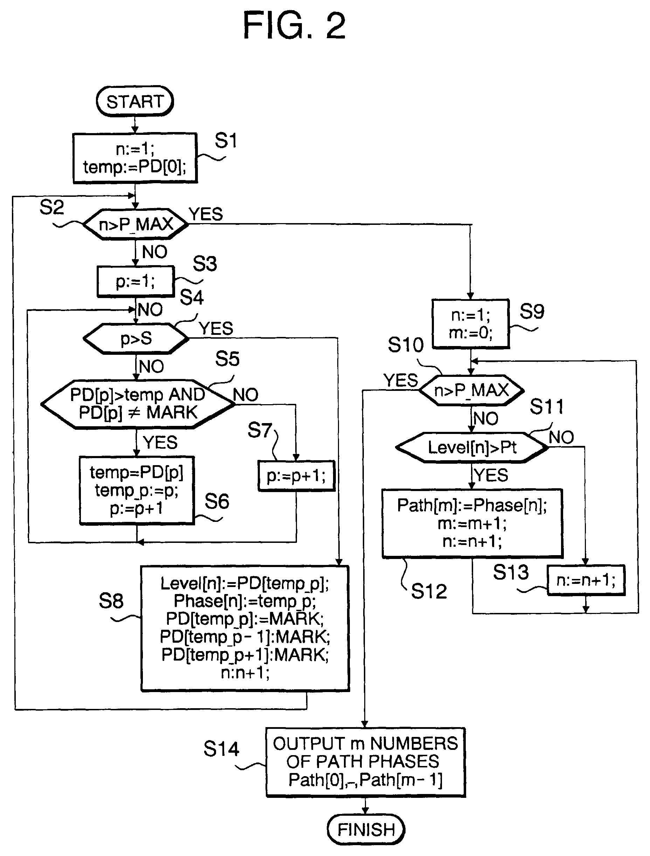

An operation example for path phase detection with respect to delay profile data PD[0] to PD[S] subjected to the averaging processing and output from delay profile data averaging section 3 will be described FIG.2. FIG.2 is a flowchart illustrating an operation example for the path phase detection at path selecting section 5 and valid path deciding section 7 in the synchronization processing apparatus of the conventional technique. In FIG. 2, S1 to S8 indicate an operation of path selecting section 5 and S9 to S14 indicate an operation of valid path deciding section 7.

In step (hereinafter abbreviated as S) 1, variable n is initialized to 1, PD[0] is substituted for variable temp to shift to S2. In S2, a comparison of maximum selection path number P-MAX with variable n is performed. Since P-MAX numbers of path phase detentions are finished when n>P-MAX, the processing shifts to S9, otherwise the processing shifts to S3.

In S3, variable p is initialized to 1 to shift to S4. In S4, a comparison of variable p with search width S is performed. The processing shifts to S8 for the next path phase detection when p>S, otherwise the processing shifts to S5. In S5, a comparison of PD[p] with temp is performed, and when PD[p]>temp and a value of PD[p] is not MARK, the processing shifts to S6 because it is anon-detected path phase, otherwise the processing shifts to S7. MARK is a mark for indicating a detected path phase.

In S6, variable p is substituted for variable temp-p, and received power level PD[p]corresponding to this path phase p is substituted for variable temp, and 1 is incremented to a value of variable p to shift to S4. In S7, 1 is incremented to a value of variable p to shift to S4.

In S8, path phase temp-p that is detected at the nth time is substituted for Phase[n], received power level PD[temp-p] is substituted for Level[n]. At this point, since temp-p is a detected path phase, MARK is substituted for PD[temp-p], and further MARK is substituted for neighboring phases temp-p-1 and temp-p+1. It is because only a path phase having a distance more than one chip should be decided as a different independent path (in the case of twice-oversampling). 1 is incremented to a value of variable n for the next path phase detection to shift to S2.

In S9, variable n is initialized by 1, and variable m is initialized by 0 to shift to S10. In S10, a comparison of variable n with P-MAX is performed. Since P-MAX numbers of path phase detentions are finished when n>P-MAX, the processing shifts to S14, otherwise the processing shifts to S11.

In S11, a comparison of received power level Level[n] of nth path phase detected at path selecting section 5 with valid path threshold value Pt. Since it is decided as a valid path when Level[n]>Pt, the processing shifts to S11, otherwise the processing shifts to S13.

In S12, in order to make the nth path phase Phase[n] decided as valid the mth valid path phase, Phase[n] is substituted for Path[m]. 1 is incremented to variable m and variable n to shift to S10. In S13, since it is decided that the nth path phase is not a valid path phase, 1 is incremented to variable n to shift to S10. In S14, since valid path deciding section 7 finishes the decision of valid or invalid of path with respect to all P-MAX numbers of path phases detected by path selecting section 5, m numbers of path phases Path[0] to Path[m-1] are output to finish the path phase detection operation.

However, the synchronization processing apparatus described in the above conventional technique operates to select paths whose received power levels are high using a predetermined maximum selection path number as a upper limit in a range of search width. At this point, since paths are selected based on received power levels, the conventional apparatus sometimes recognizes paths received from a plurality of mobile stations as paths received from the same one mobile station to select in the case where random accesses from a plurality of mobile stations (communication terminal apparatuses) occur at the almost same timing.

The above phenomenon will be described in detail below. For example, when different mobile stations MS1 and MS2 transmit burst signals by random access channel at the almost same time, delay profile illustrated in FIG.3 is observed at the synchronization processing apparatus of a receiver of a base station. FIG.3 is a diagram illustrating output data from a delay profile data averaging section at synchronization processing apparatus.

In FIG.3, received signals from mobile station MS1 are paths a, b and c, and received signals from mobile station MS2 are paths x, y and z. A difference between positions (path phase) observed in the delay profile of paths a, b, c and paths x, y, z corresponds to a difference between D1 that is a distance between mobile station MS1 and base station BTS and D2 that is a distance between mobile station MS2 and base station BTS.

In a CDMA mobile communication system, it is necessary to perform transmission power control with high accuracy to reduce interference between channels. A mobile station estimates propagation loss ∆L between the mobile station and base station BTS by measuring received level of a perch channel at each mobile station to determine transmission power level of a bursts signal to be transmitted by random access channel. This method is called open-loop transmission power control.

According to the above method, it is possible to achieve the control so that received power from every mobile station is the almost same at base station BTS. Therefore, received paths from mobile station MS1 and mobile station MS 2 are observed as a path with the almost same received power in the delay profile illustrated in FIG.3 not depending on a distance from base station BTS.

Accordingly, the synchronization processing apparatus in the conventional technique decides a received path from mobile station MS1 and a received path from mobile station MS2 as a multipath from the same mobile station. Therefore it has been a problem that the conventional synchronization processing apparatus sets path phases of paths x, a, b and c at a RAKE receiving section when selects four path phases, and combines a received signal from MS1 and a received signal from MS2. when the RAKE receiving section combines received signal form different mobile stations, it is not possible to correctly output a signal transmitted from any one of mobile stations.

SUMMARY OF THE INVENTION

An object of the present invention is to provide a CDMA synchronization processing apparatus capable of detecting path phases for enabling a RAKE receiving section to as much as possible avoid combining received signals from different mobile stations.

The apparatus according to the present invention detects, for example, in a range of search width S where a path phase of a received signal from a mobile station can be detected, path x that is a path with maximum received power, sets a search window of width W(<S) including the path x, and detects paths x, y and z to set at a RAKE receiving section in a range of W. The search window width W may be set in a range equal to or less than a spread width (delay spread) of multipath from the same mobile station (about two-digit μsec).

According to the above processing, it is possible to obtain an excellent synchronization processing apparatus for enabling a RAKE receiving section to as much as possible avoid combining received signals from different mobile stations. It is not a problem to exclude paths exceeding the search window width W from an object to be selected because the possibility that those paths become valid paths for RAKE receiving is extremely low since those paths are supposed to have a propagation loss that is large enough against a direct wave.

BRIEF DESCRIPTION OF THE DRAWINGS

The above and other objects and features of the invention will appear more fully hereinafter from a consideration of the following description taken in connection with the accompanying drawing wherein one example is illustrated by way of example, in which:

FIG.1 is a block diagram illustrating a configuration of a conventional synchronization processing apparatus;

FIG.2 is a flowchart of path phase detection operation of the conventional synchronization processing apparatus;

FIG.3 is a diagram illustrating an example of delay profile data;

FIG.4 is a block diagram illustrating a configuration example of a CDMA receiver;

FIG.5 is a block diagram illustrating a configuration of a synchronization processing apparatus according to a first embodiment of the present invention;

FIG.6 is a diagram illustrating a relationships of a search window and a search width in the present invention;

FIG.7 is a flowchart of path phase detection operation of the synchronization processing apparatus according to the first embodiment of the present invention;

FIG.8 is a block diagram illustrating a configuration of a synchronization processing apparatus according to a second embodiment of the present invention;

FIG.9 is a flowchart of path phase detection operation of the synchronization processing apparatus according to the second embodiment of the present invention;

FIG.10 is a block diagram illustrating a configuration of a synchronization processing apparatus according to a third embodiment of the present invention;

FIG.11 is a flowchart of path phase detection operation of the synchronization processing apparatus according to the third embodiment of the present invention;

FIG.12 is a block diagram illustrating a configuration of a synchronization processing apparatus according to a fourth embodiment of the present invention; and

FIG.13 is a flowchart of path phase detection operation of the synchronization processing apparatus according to the fourth embodiment of the present invention.

DETAILED DESCRIPTION OF THE PREFERRED EMBODIMENTS

The embodiments of the present invention will be described below in detail with reference to accompanying drawings.

(First embodiment)

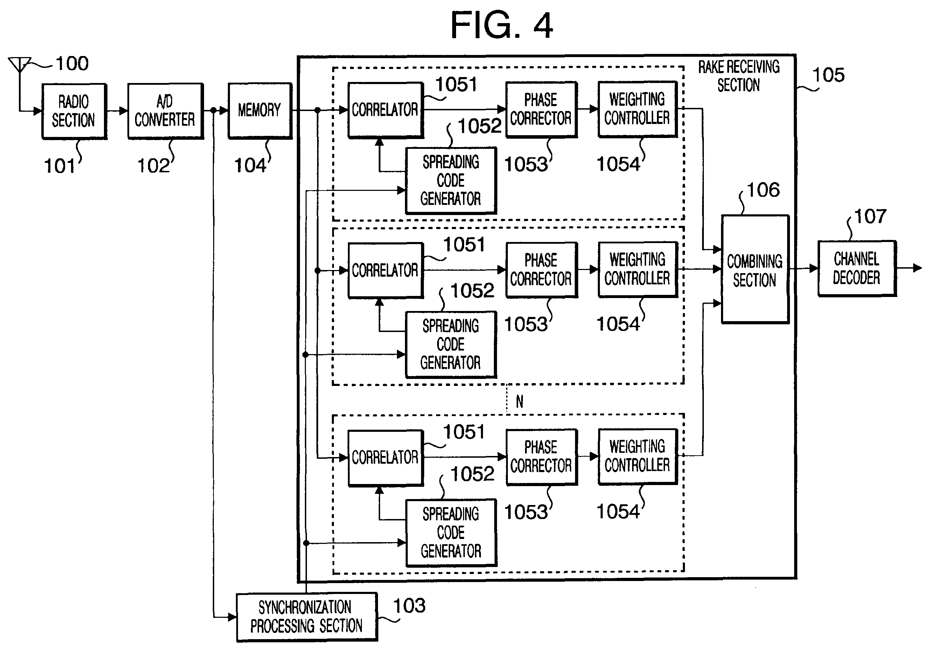

FIG.4 is a block diagram illustrating a configuration of a CDMA receiver having a RAKE receiving function. In FIG.4, the CDMA receiver, which is placed in a base station to receive a reverse burst signal from a mobile station, is composed of radio section 101 connected to receiving antenna 100 for demodulating a spread signal from a received RF signal, A/D converter 102 for converting analog data output from radio section 101 into digital data, synchronization processing section 103 for detecting spreading code phases of a plurality of paths from the digital spread signals output from A/D converter 102, memory 104 for storing received spread data, RAKE receiving section 105 for performing RAKE receiving based on the spreading code phases detected by synchronization processing section 103, and channel decoder 107 for performing a frame deconstruction using output data from RAKE receiving section 105 based on a radio channel frame format to decode information from a mobile station.

RAKE receiving section 105 is composed of spreading code generators 1052 each for generating spreading codes, correlators 1051 each for obtaining correlation of a spread signal read from memory 104 with the spreading code output from respective spreading code generator 1052 to output, phase correctors 1053 each for correcting the phase output from respective correlator 1051 to make every phase output from each correlator the same phase, weighting controllers 1054 each for performing a predetermined weighting on the output from respective phase correlator 1053, and combining section 106 for combining the outputs from weighting controllers 1054. The RAKE receiving section 105 thus has the RAKE receiving function for obtaining a correlation value individually with respect to a plurality of different paths assigned by synchronization processing section 103, correcting the phases, then performing a predetermined weighting to combine.

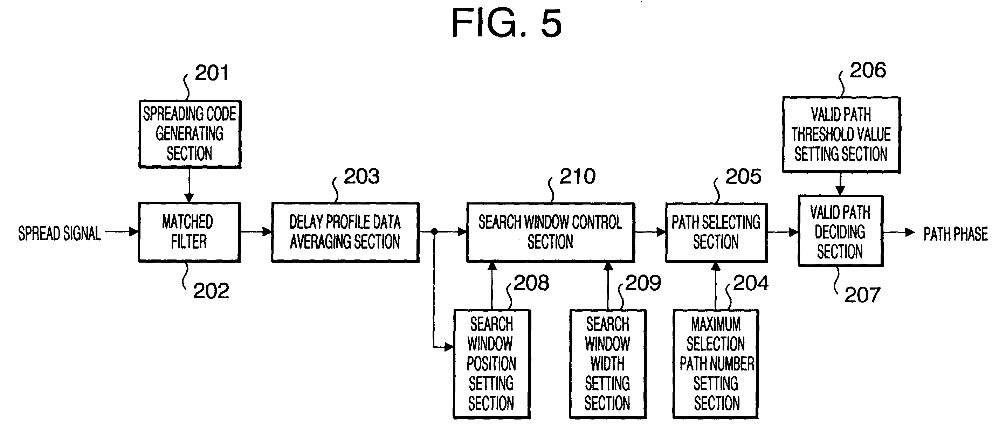

FIG.5 is a block diagram illustrating a configuration of a synchronization processing apparatus according to the present invention used in the above synchronization processing section 103. In FIG.5, the principal part of the synchronization processing apparatus is composed of spreading code generating section 201 for generating spreading codes, matched filter 202 for outputting correlation values of received spread data with the spreading code output from spreading code generating section 201 varying a phase of the spreading code in a time sequence, delay profile data averaging section 203 for performing averaging processing on outputs from matched filter 202 over a predetermined interval to generate delay profile data, search window position setting section 208 for detecting a path phase with maximum received power from the data output from delay profile data averaging section 203 , search window width setting section 209 for performing setting of a search window width determined according to a cell radius of a base station, search window control section 210 for setting a search window with the search window width instructed from search window width setting section 209 at a search window position instructed from search window position setting section 208, maximum selection path number setting section 204 for setting the upper limit of the number of paths which the synchronization processing apparatus can select, path selecting section 205 for selecting as a maximum N numbers of paths in order of the higher received power from paths with maximum received power corresponding to N numbers of paths assigned by maximum selection path number setting section 204 in the range of the search window set by search window control section 210, valid path threshold value setting section 206 for setting a threshold value to limit paths in obtaining candidate paths to be subjected to RAKE receiving, and valid path deciding section 207 for selecting only the path more than the threshold value set by valid path threshold value setting section 204 from among paths selected by path selecting section 205.

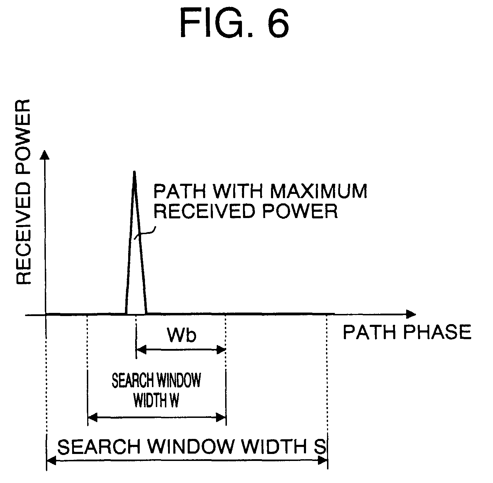

The operation of the synchronization processing apparatus configured as described above will be described using FIG.5. The synchronization processing apparatus according to the present invention, prior to initiate an operation of path phase detection, sets a type of spreading code used in the random access channel at spreading code generating section 201, sets maximum selection path number P-MAX at maximum selection path number setting section 204, sets valid path threshold value Pt at valid path threshold value setting section 206, and further sets search window width W and parameter Wb used to decide whether a search window is set to a path phase with maximum received power detected by search window position setting section 208 at search window width setting section 209. FIG.6 illustrates the relationship of parameter Wb to search window width W.

The operations of spreading code generating section 201 and matched filter 202 and delay profile averaging section 203 are the same as the synchronization processing section illustrated in FIG.1. The description is given to the case of operating the synchronization processing apparatus according to the present invention by twice-oversampling.

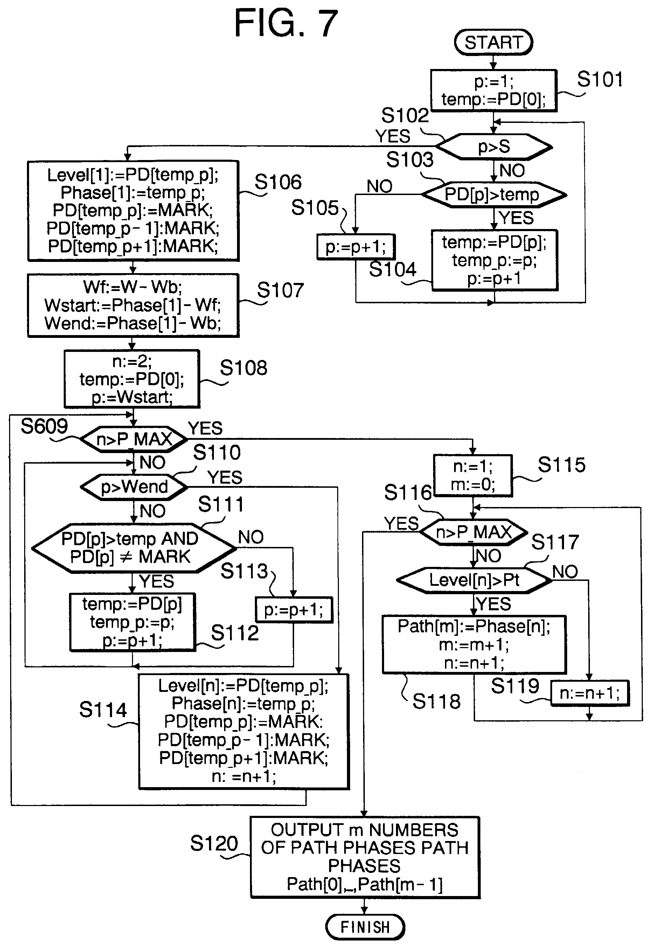

An operation for the path phase detection with respect to delay profile data PD[0] to PD[S] subjected to the averaging processing and output from delay profile data averaging section 203 will be described using FIG.7. FIG.7 is a flowchart illustrating the operations for the path phase detection at search window position setting section 208, search window control section 210, path selecting section 205 and valid path deciding section 207 in the synchronization processing apparatus according to the first embodiment of the present invention. In FIG. 7, S101 to S106 indicate an operation of search window position setting section 208, S107 indicates an operation of search window control section 210, S108 to S114 indicate an operation of path selecting section 205, and S115 to S120 indicate an operation of valid path deciding section 207.

In S101, variable p is initialized by 1, PD[0] is substituted for variable temp to shift to S102. In S102, a comparison of variable p with search width S is performed. Since a detection of path phase with maximum received power is finished when p>S, the processing shifts to S106, otherwise the processing shifts to S103.

In S103, a comparison of PD[p] with temp is performed, and when PD[p]>temp, the processing shifts to S104, otherwise the processing shifts to S105. In S104, variable p is substituted for variable temp-p, and received power level PD[p] corresponding to this path phase p is substituted for variable temp, and 1 is incremented to a value of variable p to shift to S102. In S105, 1 is incremented to a value of variable p to shift to S102.

In S106, phase temp-p of a path with detected maximum received power is substituted for Phase [1], and received power level PD[temp-p] corresponding to path phase temp-p is substituted for Level[1]. At this point, since temp-p is a detected path phase, MARK is substituted for PD[temp-p], and further MARK is substituted for neighboring phases temp-p-1 and temp-p+1 to shift to S107. It is thus possible to detect a position of a path that becomes a criterion of a search width. It is further possible to obtain a level of the path that becomes a criterion of a search width, thereby facilitating a control of search width and a determination of selected path number.

In S107, W-Wb is substituted for variable Wf to set a search window according to search width W and Wb instructed from search window width setting section 209, Phase[1]-Wf is substituted for variable Wstart that indicates a start position of the search window, and Phase]1]-Wb is substituted for variable Wend that indicates an end position of the search window to shift to S108.

In S108, variable n is initialized to 2, PD[0] is substituted for variable temp, search window start position Wstart is substituted for variable p to shift to S109.

In S109, a comparison of variable n with maximum selection path number P-MAX is performed. Since P-MAX numbers of path phase detentions are finished when n>P-MAX, the processing shifts to S115, otherwise the processing shifts to S110.

In S110, a comparison of variable p with search window end position Wend is performed. The processing shifts to S114 when p>Wend, otherwise the processing shifts to S111. In S111, a comparison of PD(p) with variable temp is performed, and when PD[p]>temp and a value of PD[p] is not MARK, the processing shifts to S112 because it is a non-detected path phase, otherwise the processing shifts to S113.

In S112, variable p is substituted for variable temp-p, and received power level PD[p]corresponding to this path phase p is substituted for variable temp, and 1 is incremented to a value of variable p to shift to S110. In S113, 1 is incremented to a value of variable p to shift to S110.

In S114, path phase temp-p that is detected at the nth time is substituted for Phase [n], received power level PD[temp-p] corresponding to path phase temp-p is substituted for Level[n]. At this point, since temp-p is a detected path phase, MARK is substituted for PD[temp-p], and further MARK is substituted for neighboring phases temp-p-1 and temp-p+1. 1 is incremented to a value of variable n for the next path phase detection to shift to S109.

In S115, variable n is initialized by 1, and variable m is initialized by 0 to shift to S116. In S116, a comparison of variable n with P-MAX is performed. Since P-MAX numbers of path phase detentions are finished when n>P-MAX, the processing shifts to S120, otherwise the processing shifts to S117. It is thus possible to properly set the maximum path number to be selected in a search width.

In S117, a comparison of received power level Level[n] of nth path phase detected at path selecting section 205 with valid path threshold value Pt. Since it is decided as a valid path when Level[n]>Pt, the processing shifts to S118, otherwise the processing shifts to S119.

In S118, in order to make the nth path phase Phase[n] decided as valid the mth valid path phase, Phase[n] is substituted for Path[m]. 1 is incremented to variable m and variable n to shift to S116. In S119, since it is decided that the nth path phase is not a valid path phase, 1 is incremented to variable n to shift to S116.

In S120, since valid path deciding section 207 finishes the decision of valid or invalid of path with respect to all P-MAX numbers of path phases detected by path selecting section 205, m numbers of path phases Path[0] to Path[m-1] are output to finish the path phase detection operation.

The detected path phases are provided to spreading code generator 1053 at RAKE receiving section 105 from synchronization processing section 103. Spreading code generator 1053 performs a timing control using the input path phase as a phase of a spreading code, and according to the timing, outputs a spreading code to correlator 1051. Correlator 1051 performs correlation processing of a received signal with the spreading code.

The correlation processing result is provided to phase corrector 1053. Phase corrector 1053 corrects the output from correlator 1051 to make every phase output from each correlator the same phase. The corrected result is provided to weighting controller 1054. At weighting controller 1054, a predetermined weighting is performed on the output from phase corrector 1053. The output from weighting controller 1054 is provided to combining section 106 for RAKE combining, and output to channel decoder 107.

As described above, according to the first embodiment of the present invention, since a search window position setting section for detecting a path phase having maximum received power in delay profile data and a search window control section for setting a search window in a search width in order to include the path with maximum received power detected by the search window position setting section are comprised, a path to be subjected to RAKE receiving is selected in a range of the search window to perform the path search. According to the above processing, it is possible to perform the path phase detection for as much as possible preventing received signals from different mobile stations from being combined even when random accesses from a plurality of different mobile stations occur at the almost same timing.

(Second embodiment)

The second embodiment of the present invention enables an apparatus according to the first embodiment to set a proper search window width based on the received power level of a path with maximum received power detected by the search window position setting section.

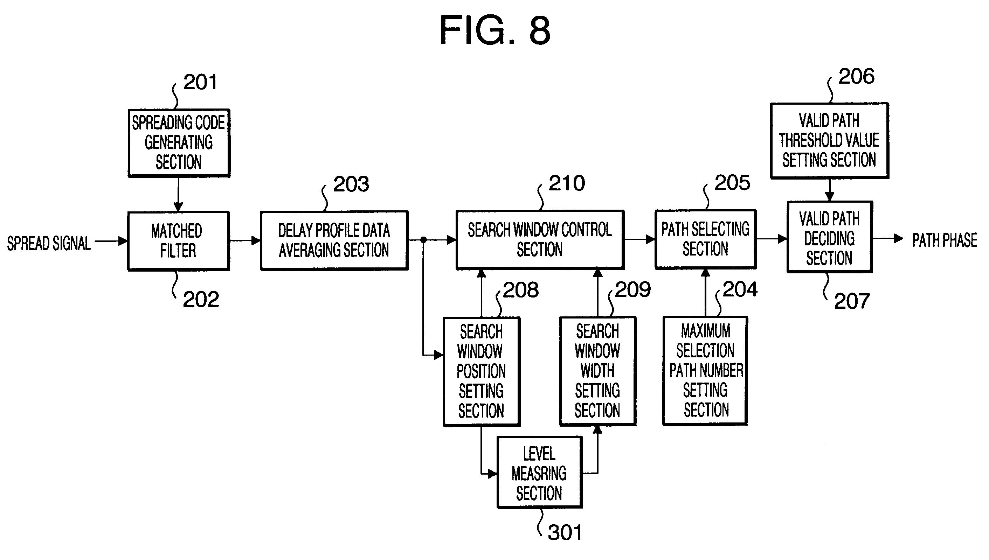

FIG.8 is a block diagram illustrating a configuration of a synchronization processing apparatus according to the second embodiment of the present invention. The synchronization processing apparatus has a configuration where level measuring section 301 is installed in the synchronization processing apparatus illustrated in FIG.5. In addition, in FIG.8, the same sections as in FIG.5 have the same symbols as FIG.5 to omit the detailed description.

The operation will be described below using FIG.8. This synchronization processing apparatus, prior to initiate an operation of path phase detection, sets a type of spreading code used in the random access channel at spreading code generating section 201, sets maximum selection path number P-MAX at maximum selection path number setting section 204, and sets valid path threshold value Pt at valid path threshold value setting section 206.

The operations of spreading code generating section 201, matched filter 202 and delay profile averaging section 203 are the same as the synchronization processing apparatus illustrated in FIG.1. The description is given to the case of operating the synchronization processing apparatus according to the present invention by twice-oversampling.

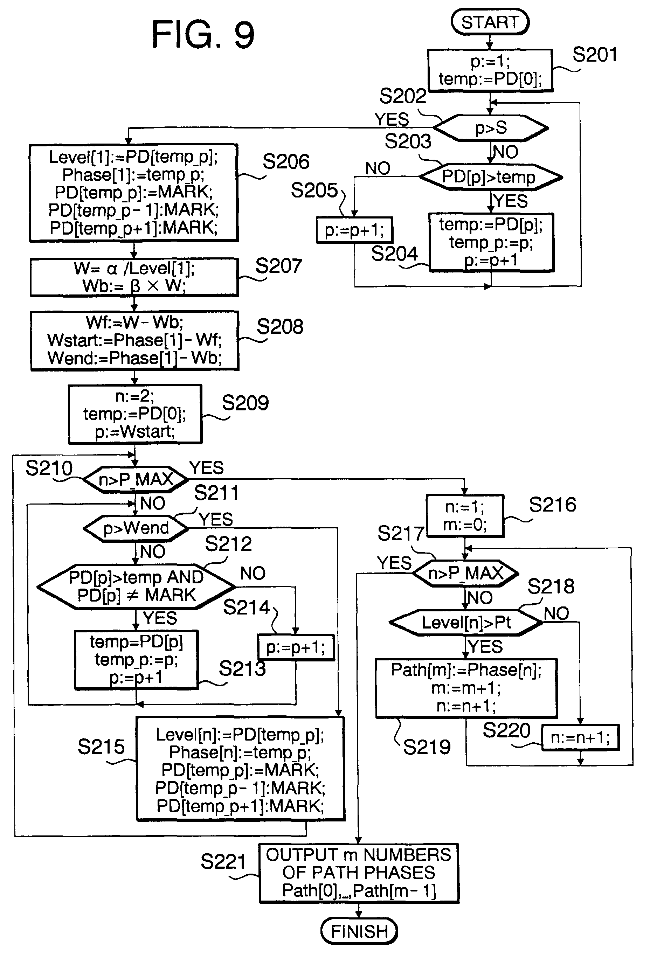

An operation for the path phase detection with respect to delay profile data PD[0] to PD[S] subjected to the averaging processing and output from delay profile data averaging section 203 will be described using FIG.9. FIG.9 is a flowchart illustrating the operations for the path phase detection at search window position setting section 208, level measuring section 301, search window control section 210, path selecting section 205 and valid path deciding section 207 in the synchronization processing apparatus according to the second embodiment of the present invention. In FIG.9, S201 to S206 indicate an operation of search window position setting section 208, S207 indicates an operation of level measuring section 301, S208 indicates an operation of search window control section 210, S209 to S215 indicate an operation of path selecting section 205, and S216 to S221 indicate an operation of valid path deciding section 207.

In S201, variable p is initialized by 1, PD[0] is substituted for variable temp to shift to S202. In S202, a comparison of variable p with search width S is performed. Since a detection of path phase with maximum received power is finished when p>S, the processing shifts to S206, otherwise the processing shifts to S203. In S203, a comparison of PD[p] with temp is performed, and when PD[p]>temp, the processing shifts to S204, otherwise the processing shifts to S205.

In S204, variable p is substituted for variable temp-p, and received power level PD[p] corresponding to this path phase p is substituted for variable temp, and 1 is incremented to a value of variable p to shift to S202. In S205, 1 is incremented to a value of variable p to shift to S202.

In S206, phase temp-p of a path with detected maximum received power is substituted for Phase [1], and received power level PD[temp-p] corresponding to path phase temp-p is substituted for Level[1]. At this point, since temp-p is a detected path phase, MARK is substituted for PD[temp-p], and further MARK is substituted for neighboring phases temp-p-1 and temp-p+1 to shift to S207.

In S207, with respect to received power level Level[1] of a path with maximum received power detected by search window position setting section 208, $\alpha$/Level[1] is substituted for search window width w, and $\beta \times w$ is substituted for Wb to shift to S208. In addition, $\alpha$ is a coefficient to determine a proper search window width corresponding to a value of Level[1], and determined corresponding to a radio wave propagation environment around a place where a base station equipped with the synchronization processing apparatus of the present invention is placed. The example herein indicates $W = \alpha / \text{Level}[1]$ as a method for determining W. However, in the case where a value of $\alpha/\text{Level}[1]$ does not become an integer, it is necessary to make the value integer by processing prior to substitute for W. As other method for determining W, a method for making a value of W lower when Level[1] is high, while making the value of W higher when Level[1] is low, is applicable. Another method where a conversion table for determining w corresponding to a value of Level[1] is predetermined, and W is determined according to the table is also considerable.

In addition, $\beta$ is a coefficient for determining a position of Phase[1] in a search window, and adopts a value of $0 < \beta \leq 1$. Setting $\beta$ of less than 1 functions effectively in the case where received power of a delayed wave is higher than that of the direct wave.

In S208, W-Wb is substituted for variable Wf to set a search window according to search width W and Wb instructed from search window width setting section 209, Phase[1]-Wf is substituted for variable Wstart that indicates a start position of the search window, and Phase[1]-Wb is substituted for variable Wend that indicates an end position of the search window to shift to S209.

In S209, variable n is initialized by 2, PD[0] is substituted for variable temp, search window start position Wstart is substituted for variable p to shift to S210. In S210, a comparison of variable n with maximum selection path number P-MAX is performed. Since P-MAX numbers of path phase detentions are finished when n>P-MAX, the processing shifts to S216, otherwise the processing shifts to S211.

In S211, a comparison of variable p with search window end position Wend is performed. The processing shifts to S215 when p>Wend, otherwise the processing shifts to S212. In S212, a comparison of PD[p] with variable temp is performed, and when PD[p]>temp and a value of PD[p] is not MARK, the processing shifts to S213 because it is a non-detected path phase, otherwise the processing shifts to S214.

In S213, variable p is substituted for variable temp-p, and received power level PD[p] corresponding to this path phase p is substituted for variable temp, and 1 is incremented to a value of variable p to shift to S211. In S214, 1 is incremented to a value of variable p to shift to S211.

In S215, path phase temp-p that is detected at the nth time is substituted for Phase [n], received power level PD[temp-p] corresponding to path phase temp-p is substituted for Level[n]. At this point, since temp-p is a detected path phase, MARK is substituted for PD[temp-p], and further MARK is substituted for neighboring phases temp-p-1 and temp-p+1. 1 is incremented to a value of variable n for the next path phase detection to shift to S210.

In S216, variable n is initialized by 1, and variable m is initialized by 0 to shift to S217. In S217, a comparison of variable n with P-MAX is performed. Since P-MAX numbers of path phase detentions are finished when n>P-MAX, the processing shifts to S221, otherwise the processing shifts to S218.

In S218, a comparison of received power level Level[n] of nth path phase detected at path selecting section 205 with valid path threshold value Pt. Since it is decided as a valid path when Level[n]>Pt, the processing shifts to S219, otherwise the processing shifts to S220.

In S219, in order to make the nth path phase Phase[n] decided as valid the mth valid path phase, Phase[n] is substituted for Path[m]. 1 is incremented to variable m and variable n to shift to S217. In S220, since it is decided that the nth path phase is not a valid path phase, 1 is incremented to variable n to shift to S217.

In S221, since valid path deciding section 207 finishes the decision of valid or invalid of path with respect to all P-MAX numbers of path phases detected by path selecting section 205, m numbers of path phases Path[0] to Path[m-1] are output to finish the path phase detection operation.

The detected path phases are provided to RAKE receiving section 105 and used in performing the RAKE combining processing. In addition, the method for performing the RAKE combining processing using these path phases is the same as the first embodiment.

As described above, according to the second embodiment, level measuring section 301 determines a proper search window width W based on received power level Level[1] of a path with maximum received power detected by search window position setting section 208. According to the above processing, in the case where Level[1] is high enough, since it is possible to good receiving characteristics by combining even a small number of paths, the possibility that paths from different mobile stations are included in a search window width is further reduced by setting the search window width narrower. On the other hand, in the case where Level[1] is low, in order to improve the receiving characteristics, it is possible to perform path phase detection by setting the search window width wider to select an enough number of paths that are effective for RAKE receiving.

(Third embodiment)

The third embodiment of the present invention enables an apparatus according to the second embodiment to set a proper maximum selection path number based on the received power level of a path with maximum received power detected by the search window position setting section. Level measuring section 301 determines the maximum selection path number corresponding to the received power level of a path with maximum power level, and a maximum selection path number setting section is further comprised to instruct the maximum selection path number to path selecting section 205.

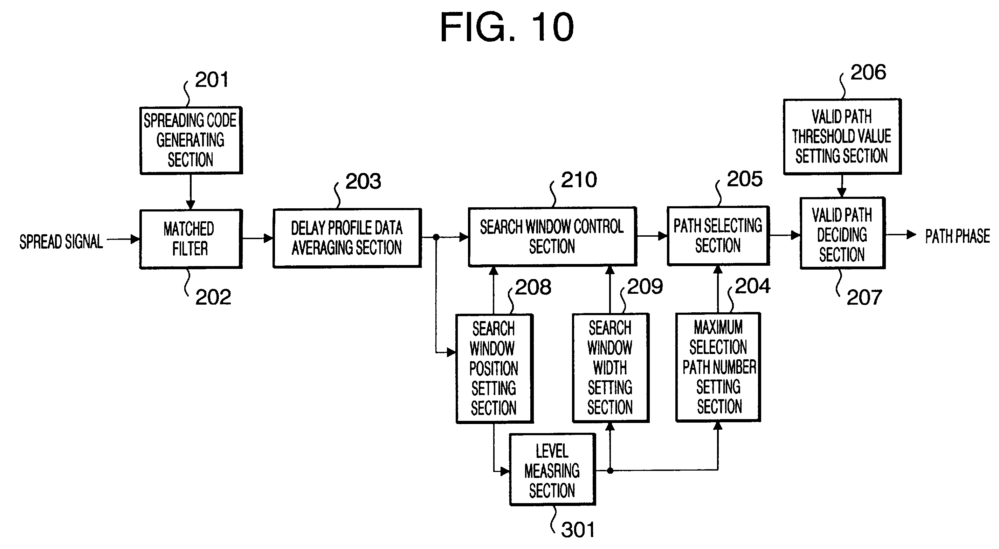

The operation in this synchronization processing apparatus will be described using FIG.10. The synchronization processing apparatus, prior to initiate an operation of path phase detection, sets a type of spreading code used in the random access channel at spreading code generating section 201, and sets valid path threshold value Pt at valid path threshold value setting section 206.

The operations of spreading code generating section 201, matched filter 202 and delay profile averaging section 203 are the same as the synchronization processing apparatus illustrated in FIG.1. The description is given to the case of operating the synchronization processing apparatus according to the present invention by twice-oversampling.

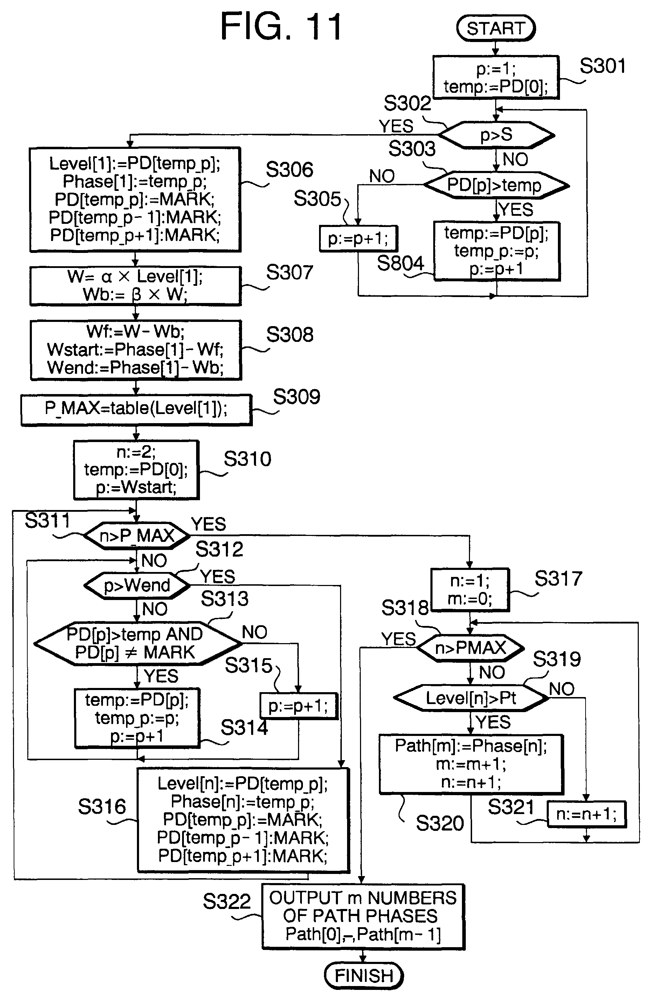

An operation for the path phase detection with respect to delay profile data PD[0] to PD[S] subjected to the averaging processing and output from delay profile data averaging section 203 will be described using FIG.11. FIG.11 is a flowchart illustrating the operations for the path phase detection at search window position setting section 208, level measuring section 301, search window control section 210, path selecting section 205 and valid path deciding section 207 in the synchronization processing apparatus according to the third embodiment of the present invention. In FIG.11, S301 to S306 indicate an operation of search window position setting section 208, S307 and S308 indicate an operation of level measuring section 301, S308 indicates an operation of search window control section 210, S310 to S316 indicate an operation of path selecting section 205, and S317 to S322 indicate an operation of valid path deciding section 207.

In S301, variable p is initialized by 1, PD[0] is substituted for variable temp to shift to S302. In S302, a comparison of variable p with search width S is performed. Since a detection of path phase with maximum received power is finished when p>S, the processing shifts to S306, otherwise the processing shifts to S303.

In S303, a comparison of PD[p] with temp is performed, and when PD[p]>temp, the processing shifts to S304, otherwise the processing shifts to S305. In S304, variable p is substituted for variable temp-p, and received power level PD[p]corresponding to this path phase p is substituted for variable temp, and 1 is incremented to a value of variable p to shift to S302. In S305, 1 is incremented to a value of variable p to shift to S302.

In S306, phase temp-p of a path with detected maximum received power is substituted for Phase [1], and received power level PD[temp-p] corresponding to path phase temp-p is substituted for Level[1]. At this point, since temp-p is a detected path phase, MARK is substituted for PD[temp-p], and further MARK is substituted for neighboring phases temp-p-1 and temp-p+1 to shift to S307.

In S307, with respect to received power level Level[1] of a path with maximum received power detected by search window position setting section 208, $\alpha$/Level[1] is substituted for search window width w, and $\beta \times w$ is substituted for Wb to shift to S308. At this point, a method for determining $\alpha$ and $\beta$ is the same as the second embodiment and the description is omitted.

In S308, W-Wb is substituted for variable Wf to set a search window according to search width W and Wb instructed from search window width setting section 209, Phase[1]-Wf is substituted for variable Wstart that indicates a start position of the search window, and Phase[1]-Wb is substituted for variable Wend that indicates an end position of the search window to shift to S309.

In S309, a value of maximum selection path number P-MAX is determined based on a value of Level[1] to shift to S310. At this point, table(Level[1]) indicates that the maximum selection path number is obtained from a value of Level[1] using a conversion table. In the conversion table, the maximum selection path number is decreased when the value of Level[1] is high, while the maximum selection path number is increased when the value of Level[1] is low.

In S310, variable n is initialized by 2, PD[0] is substituted for variable temp, search window start position Wstart is substituted for variable p to shift to S311. In S311, a comparison of variable n with maximum selection path number P-MAX is performed. Since P-MAX numbers of path phase detentions are finished when n>P-MAX, the processing shifts to S317, otherwise the processing shifts to S312.

In S312, a comparison of variable p with search window end position Wend is performed. The processing shifts to S316 when p>Wend, otherwise the processing shifts to S313.

In S313, a comparison of PD[p] with variable temp is performed, and when PD[p]>temp and a value of PD[p] is not MARK, the processing shifts to S314 because it is a non-detected path phase, otherwise the processing shifts to S315.

In S314, variable p is substituted for variable temp-p, and received power level PD[p]corresponding to this path phase p is substituted for variable temp, and 1 is incremented to a value of variable p to shift to S312. In S315, 1 is incremented to a value of variable p to shift to S312.

In S316, path phase temp-p that is detected at the nth time is substituted for Phase [n], received power level PD[temp-p] corresponding to path phase temp-p is substituted for Level[n]. At this point, since temp-p is a detected path phase, MARK is substituted for PD[temp-p], and further MARK is substituted for neighboring phases temp-p-1 and temp-p+1. 1 is incremented to a value of variable n for the next path phase detection to shift to S311. In S317, variable n is initialized by 1, and variable m is initialized by 0 to shift to S318.

In S318, a comparison of variable n with P-MAX is performed. Since P-MAX numbers of path phase detentions are finished when n>P-MAX, the processing shifts to S322, otherwise the processing shifts to S319.

In S319, a comparison of received power level Level[n] of nth path phase detected at path selecting section 205 with valid path threshold value Pt. Since it is decided as a valid path when Level[n]>Pt, the processing shifts to S320, otherwise the processing shifts to S321.

In S320, in order to make the nth path phase Phase[n] decided as valid the mth valid path phase, Phase[n] is substituted for Path[m]. 1 is incremented to variable m and variable n to shift to S318. In S321, since it is decided that the nth path phase is not a valid path phase, 1 is incremented to variable n to shift to S318.

In S322, since valid path deciding section 207 finishes the decision of valid or invalid of path with respect to all P-MAX numbers of path phases detected by path selecting section 205, m numbers of path phases Path[0] to Path[m-1] are output to finish the path phase detection operation.

The detected path phases are provided to RAKE receiving section 105 and used in performing the RAKE combining processing. In addition, the method for performing the RAKE combining processing using these path phases is the same as the first embodiment.

As described above, according to the third embodiment of the present invention, level measuring section 301 determines a proper maximum selection path number P-MAX based on received power level Level[1] of a path with maximum received power detected by search window position setting section 208. According to the above processing, in the case where Level[1] is high enough, since it is possible to good receiving characteristics by combining even a small number of paths, the possibility that paths from different mobile stations are included in a search window width is further reduced by setting maximum selection path number smaller. On the other hand, in the case where Level[1] is low, in order to improve the receiving characteristics, it is possible to perform path phase detection by setting maximum selection path number P-MAX larger to select an enough number of paths that are effective for RAKE receiving.

(Fourth embodiment)

The fourth embodiment of the present invention enables an apparatus according to the first embodiment to detect minimum value Lmin from delay profile data PD[P] to PD[S] subjected to the averaging processing and output from the delay profile data averaging section so as to set a threshold value to extract a path to be subjected to RAKE receiving corresponding to a value of Lmin, and comprises minimum value detecting section 401 in the configuration described in the first embodiment.

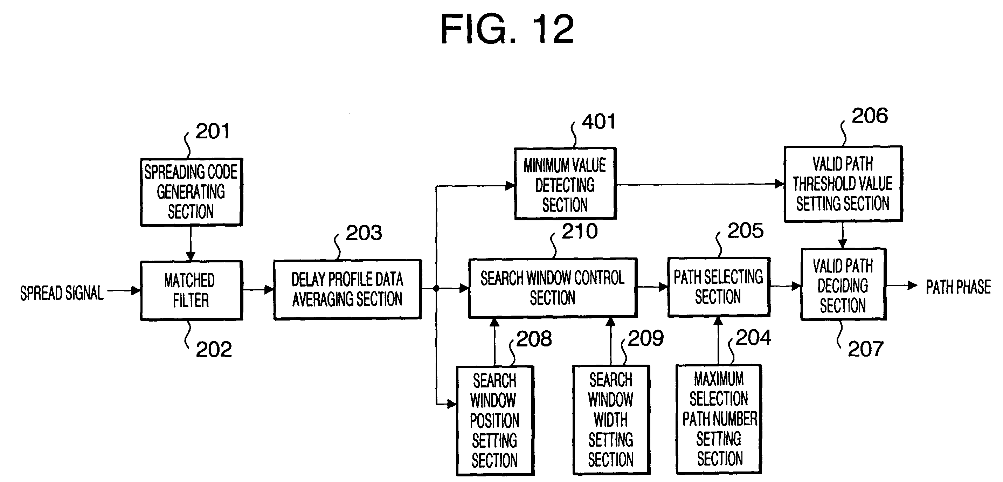

The operation will be described using FIG.12. This synchronization processing apparatus, prior to initiate an operation of path phase detection, sets a type of spreading code used in the random access channel at spreading code generating section 201, sets maximum selection path number P-MAX at maximum selection path number setting section 204, sets threshold value Pt that is a relative value determined corresponding to minimum value min detected by minimum value detecting section 401 at valid path threshold value setting section 206, and further sets search window width W and parameter Wb used to decide whether a search window is set to a path phase with maximum received power detected by search window position setting section 208 at search window width setting section 209.

The operations of spreading code generating section 201, matched filter 202 and delay profile averaging section 203 are the same as the synchronization processing apparatus illustrated in FIG.1. The description is given to the case of operating the synchronization processing apparatus according to the present invention by twice-oversampling.

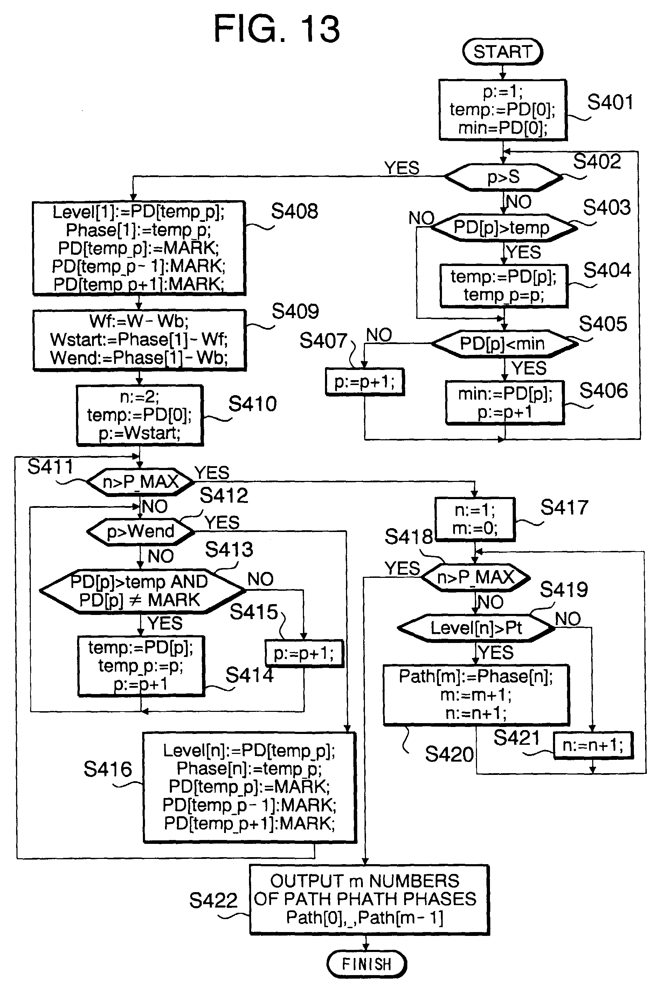

An operation for path phase detection with respect to delay profile data PD[0] to PD[S] subjected to the averaging processing and output from delay profile data averaging section 203 will be described using FIG.13. FIG.13 is a flowchart illustrating the operations for the path phase detection at search window position setting section 208, minimum value detecting section 401, search window control section 210, path selecting section 205 and valid path deciding section 207 in the synchronization processing apparatus according to the fourth embodiment of the present invention. In FIG.13, S401 to S408 indicate operations of search window position setting section 208 and minimum value detecting section 401, S409 indicates an operation of search window control section 210, S410 to S416 indicate an operation of path selecting section 205, and S417 to S422 indicate an operation of valid path deciding section 207.

In S401, variable p is initialized by 1, PD[0] is substituted for variable temp, and PD[0] is substituted for variable min to shift to S402. In S402, a comparison of variable p with search width S is performed. Since a detection of path phase with maximum received power is finished when p>S, the processing shifts to S408, otherwise the processing shifts to S403.

In S403, a comparison of PD[p] with temp is performed, and when PD[p]>temp, the processing shifts to S404, otherwise the processing shifts to S405. In S404, variable p is substituted for variable temp-p, and received power level PD[p] corresponding to this path phase p is substituted for variable temp to shift to S405.

In S405, a comparison of PD[p] with variable min is performed, and when PD[p]<min, the processing shifts to S406, otherwise the processing shifts to S407. In S406, PD[p] is substituted for variable min, and 1 is incremented to a value of variable p to shift to S402. In S407, 1 is incremented to a value of variable p to shift to S402.

In S408, phase temp-p of a path with detected maximum received power is substituted for Phase [1], and received power level PD[temp-p] corresponding to path phase temp-p is substituted for Level[1]. At this point, since temp-p is a detected path phase, MARK is substituted for PD[temp-p], and further MARK is substituted for neighboring phases temp-p-1 and temp-p+1 to shift to S409.

In S409, W-Wb is substituted for variable Wf to set a search window according to search width W and Wb instructed from search window width setting section 209, Phase[1]-Wf is substituted for variable Wstart that indicates a start position of the search window, and Phase[1]-Wb is substituted for variable Wend that indicates an end position of the search window to shift to S410.

In S410, variable n is initialized by 2, PD[0] is substituted for variable temp, search window start position Wstart is substituted for variable p to shift to S411. In S411, a comparison of variable n with maximum selection path number P-MAX is performed. Since P-MAX numbers of path phase detentions are finished when n>P-MAX, the processing shifts to S417, otherwise the processing shifts to S412.

In S412, a comparison of variable p with search window end position Wend is performed. The processing shifts to S416 when p>Wend, otherwise the processing shifts to S413. In S413, a comparison of PD[p] with variable temp is performed, and when PD[p]>temp and a value of PD[p] is not MARK, the processing shifts to S414 because it is a non-detected path phase, otherwise the processing shifts to S415.

In S414, variable p is substituted for variable temp-p, and received power level PD[p]corresponding to this path phase p is substituted for variable temp, and 1 is incremented to a value of variable p to shift to S412. In S415, 1 is incremented to a value of variable p to shift to S412.

In S416, path phase temp-p that is detected at the nth time is substituted for Phase [n], received power level PD[temp-p] corresponding to path phase temp-p is substituted for Level[n]. At this point, since temp-p is a detected path phase, MARK is substituted for PD[temp-p], and further MARK is substituted for neighboring phases temp-p-1 and temp-p+1. 1 is incremented to a value of variable n for the next path phase detection to shift to S412. In S417, variable n is initialized by 1, and variable m is initialized by 0 to shift to S418.

In S418, a comparison of variable n with P-MAX is performed. Since P-MAX numbers of path phase detentions are finished when n>P-MAX, the processing shifts to S422, otherwise the processing shifts to S419. In S419, a comparison of received power level Level[n] of nth path phase detected at path selecting section 205 with valid path threshold value min+Pt. Since it is decided as a valid path when Level[n]>Pt+min, the processing shifts to S420, otherwise the processing shifts to S421.

In S420, in order to make the nth path phase Phase[n] decided as valid the mth valid path phase, Phase[n] is substituted for Path[m]. 1 is incremented to variable m and variable n to shift to S418. In S421, since it is decided that the nth path phase is not a valid path phase, 1 is incremented to variable n to shift to S418.

In S422, since valid path deciding section 207 finishes the decision of valid or invalid of path with respect to all P-MAX numbers of path phases detected by path selecting section 205, m numbers of path phases Path[0] to Path[m-1] are output to finish the path phase detection operation.

The detected path phases are provided to RAKE receiving section 105 and used in performing the RAKE combining processing. In addition, the method for performing the RAKE combining processing is the same as the first embodiment.

As described above, according to the fourth embodiment of the present invention, minimum value detecting section 401 detects the minimum received power level min using data output from delay profile data averaging section 203, and assuming min as an approximate value of noise, sets min+Pt that is a sum of min and relative threshold value Pt predetermined to min as a received power threshold value to select a path to be subjected to RAKE receiving. This processing thus makes it possible to set a proper valid path threshold value depending on fluctuations of noise.

In addition, a receiver illustrated in FIG.4, radio section 102 generally controls an amplitude gain of a received RF signal to obtain a proper amplitude of the signal corresponding to a dynamic range of A/D converter 103. Therefore, an amplitude of a spread signal input to the synchronization processing apparatus is affected by the above control, and the noise level contained in the spread signal fluctuates. The noise level also fluctuates in an averaging interval of the averaging processing in the delay profile averaging section of the present invention.

The present invention is not limited to the above described embodiments, and various variations and modifications may be possible without departing from the scope of the present invention. In other words, the present invention is applicable to all apparatuses that need to obtain a path phase of a received signal exactly without being affected by interference waves.

As described above, according to the synchronization processing apparatus of the present invention, a search window of width W (W<S) to include a path phase with maximum received power is set in a search width S that is a range where path search should be performed in order to limit the selection range of paths to be subjected to RAKE receiving within the above search window. It is thus possible to as much as possible avoid combining a plurality of paths from different mobile stations to perform RAKE receiving.

The present invention is not limited to the above described embodiments, and various variations and modifications may be possible without departing from the scope of the present invention.

This application is based on the Japanese Patent Application No.HEI 10-103140 filed on April 14, 1998, entire content of which is expressly incorporated by reference herein.

**Claims**

1. A synchronization processing apparatus comprising:

   search width controlling means (209) for controlling a search width to a multipath spread width including a path with maximum received power in received signals subjected to spreading processing with a spreading code;
   path phase computing means for computing a phase of a path with received power higher than a predetermined threshold value in said search width; and
   timing control means for performing a control to use the computed path phase as a phase of said spreading code.

2. The synchronization processing apparatus according to claim 1, further comprising path detecting means(207) for detecting a path with maximum received power.

3. The synchronization processing apparatus according to claim 1, further comprising measuring means (301) for measuring a first received power level of a path with maximum received power.

4. The synchronization processing apparatus according to claim 3, wherein the search width control means(209) controls the search width based on the first received power level.

5. The synchronization processing apparatus according to claim 3, further comprising path selecting means(205) for selecting a path in said search width based on the first received power level.

6. The synchronization processing apparatus according to claim 3, wherein the measuring means(301) measures a second received power level of a path with minimum received power to set said predetermined threshold value based on the second received power level.

7. The synchronization processing apparatus according to claim 1, wherein the received signals are common channel signals from a communication terminal apparatus to a base station apparatus in a radio communication system.

8. A base station apparatus comprising a synchronization processing apparatus in a radio communication system, said synchronization processing apparatus comprising:

   search width controlling means(209) for controlling a search width to a multipath spread width including a path with maximum received power in received signals subjected to spreading processing with a spreading code;
   path phase computing means for computing a phase of a path with received power higher than a predetermined threshold value in said search width; and
   timing control means for performing a control to use the computed path phase as a phase of said spreading code.

9. A receiving apparatus comprising: receiving means(101) for receiving received signals subjected to spreading processing with a spreading code, wherein the received signals are common channel signals from a communication terminal apparatus to a base station apparatus in a radio communication system;

   path phase computing means for controlling a search width to a multipath spread width including a path with maximum received power in said received signals and computing phases of at least two paths with received power higher than a predetermined threshold value in said search width;
   correlation means for performing correlation processing of each of received signals of said at least two paths with said spreading code using the computed path phase as a phase of said spreading code; and
   RAKE combining means(106) for performing weighting on each of the correlation results to combine.

10. A synchronization processing method comprising the steps of:

   controlling a search width to a multipath spread width including a path with maximum received power in received signals; and
   computing a phase of a path with received power higher than a predetermined threshold value in said search width.

11. The synchronisation processing method according to claim 10, further comprising the step of measuring a first received power level of a path with maximum received power.

12. The synchronization processing method according to claim 10, further comprising the step of controlling the search width based on the first received power level.

13. The synchronization processing method according to claim 10, further comprising the step of measuring a second received power level of a path with minimum received power to set said predetermined threshold value based on the second received power level.

# FIG. 1

EP 0 951 148 A2

# FIG. 2

```
                    ┌─────────┐
                    │  START  │
                    └─────────┘
                         │
              ┌──────────────────┐
              │     n:=1;        │  S1
              │   temp:=PD[0];   │
              └──────────────────┘
                         │
         S2    ┌──────────────────┐  YES
          ◇────│      n>P_MAX     │──────────────────┐
               └──────────────────┘                  │
                       │ NO                           │
              ┌────────────────┐  S3                  │
              │     p:=1;       │                     │
              └────────────────┘  S4                  │
                       │ NO                           │
                  ┌─────────┐  YES                    │
              ◇───│   p>S   │────────────┐            │
                  └─────────┘            │      ┌──────────────┐
                       │ NO              │      │    n:=1;     │  S9
              ┌──────────────────┐  S5   │      │    m:=0;     │
          ◇───│ PD[p]>temp AND   │ NO    │      └──────────────┘
              │ PD[p] ≠ MARK     │───┐   │   S10        │
              └──────────────────┘   │   │  YES  ┌──────────────┐
                       │ YES         │   ◇───────│    n>P_MAX   │
                       │        ┌───────┐│       └──────────────┘
              ┌──────────────┐  │S7    ││              │ NO      S11
              │ temp=PD[p]   │  │p:=p+1;││       ┌──────────────┐ NO
              │ temp_p:=p;   │  └───────┘│    ◇──│  Level[n]>Pt │──┐
              │ p:=p+1       │ S6        │       └──────────────┘  │
              └──────────────┘           │              │ YES      │
                                         │      ┌──────────────┐   │
                                         │      │Path[m]:=Phase[n]; │
              ┌──────────────────────┐   │      │  m:=m+1;     │   │
              │ Level[n]:=PD[temp_p]; │   │      │  n:=n+1;     │   │
         S8   │ Phase[n]:=temp_p;     │   │      └──────────────┘   │
              │ PD[temp_p]:=MARK;     │   │         S12   S13 ┌──────────┐
              │ PD[temp_p-1]:MARK;    │   │                   │  n:=n+1; │
              │ PD[temp_p+1]:MARK;    │   │                   └──────────┘
              │ n:n+1;                │   │
              └──────────────────────┘   │
                                         │
              ┌──────────────────────┐   │
         S14  │ OUTPUT m NUMBERS      │───┘
              │ OF PATH PHASES        │
              │ Path[0],-,Path[m-1]   │
              └──────────────────────┘
                         │
                    ┌─────────┐
                    │ FINISH  │
                    └─────────┘
```

# FIG. 3

EP 0 951 148 A2

# FIG. 4

EP 0 951 148 A2

# FIG. 5

SPREAD SIGNAL

201 — SPREADING CODE GENERATING SECTION

202 — MATCHED FILTER

203 — DELAY PROFILE DATA AVERAGING SECTION

210 — SEARCH WINDOW CONTROL SECTION

205 — PATH SELECTING SECTION

206 — VALID PATH THRESHOLD VALUE SETTING SECTION

207 — VALID PATH DECIDING SECTION

PATH PHASE

208 — SEARCH WINDOW POSITION SETTING SECTION

209 — SEARCH WINDOW WIDTH SETTING SECTION

204 — MAXIMUM SELECTION PATH NUMBER SETTING SECTION

18

EP 0 951 148 A2

# FIG. 6

# FIG. 7

START

p:=1;
temp:=PD[0];  S101

S102

YES

p>S  S103

NO

PD[p]>temp

NO  YES

Level[1]:=PD[temp_p];
Phase[1]:=temp_p;
PD[temp_p]:=MARK;
PD[temp_p−1]:MARK;
PD[temp_p+1]:MARK;  S106

S105

p:=p+1;  S104

temp:=PD[p];
temp_p:=p;
p:=p+1

Wf:=W−Wb;
Wstart:=Phase[1]−Wf;
Wend:=Phase[1]−Wb;  S107

n:=2;
temp:=PD[0];
p:=Wstart;  S108

S609

n>P_MAX  YES

NO  S110

p>Wend  YES

NO  S111

PD[p]>temp AND
PD[p] ≠ MARK  NO

YES  S113

temp:=PD[p]
temp_p:=p;
p:=p+1;  S112

p:=p+1;

n:=1;
m:=0;  S115

S116

n>P_MAX  S117

NO

Level[n]>Pt  NO

YES

Path[m]:=Phase[n];
m:=m+1;
n:=n+1;  S118

S119  n:=n+1;

Level[n]:=PD[temp_p];
Phase[n]:=temp_p;
PD[temp_p]:=MARK:
PD[temp_p−1]:MARK;
PD[temp_p+1]:MARK;
n:=n+1;  S114

OUTPUT m NUMBERS
OF PATH PHASES PATH
PHASES
Path[0],_,Path[m−1]  S120

FINISH

# FIG. 8

SPREADING CODE GENERATING SECTION — 201

MATCHED FILTER — 202

DELAY PROFILE DATA AVERAGING SECTION — 203

SEARCH WINDOW CONTROL SECTION — 210

PATH SELECTING SECTION — 205

VALID PATH THRESHOLD VALUE SETTING SECTION — 206

VALID PATH DECIDING SECTION — 207

SPREAD SIGNAL

PATH PHASE

SEARCH WINDOW POSITION SETTING SECTION — 208

SEARCH WINDOW WIDTH SETTING SECTION — 209

MAXIMUM SELECTION PATH NUMBER SETTING SECTION — 204

LEVEL MEASRING SECTION — 301

EP 0 951 148 A2

# FIG. 9

START

p:=1;
temp:=PD[0];          S201

S202

YES ← p>S

S203
NO

PD[p]>temp

NO          YES

S205          temp:=PD[p];
p:=p+1;       temp_p:=p;
              p:=p+1
S204

Level[1]:=PD[temp_p];          S206
Phase[1]:=temp_p;
PD[temp_p]:=MARK;
PD[temp_p-1]:MARK;
PD[temp_p+1]:MARK;

W= α /Level[1];          S207
Wb:= β × W;

Wf:=W-Wb;          S208
Wstart:=Phase[1]-Wf;
Wend:=Phase[1]-Wb;

n:=2;          S209
temp:=PD[0];
p:=Wstart;

S210          YES
n>P_MAX

S211
NO

p>Wend          YES

NO

S212

PD[p]>temp AND          NO
PD[p] ≠ MARK

S214

YES

temp=PD[p]          p:=p+1;
temp_p:=p;
p:=p+1          S213

S215          Level[n]:=PD[temp_p];
Phase[n]:=temp_p;
PD[temp_p]:=MARK;
PD[temp_p-1]:MARK;
PD[temp_p+1]:MARK;

n:=1;          S216
m:=0;

S217

YES          n>P_MAX          S218

NO

Level[n]>Pt          NO

YES

Path[m]:=Phase[n];
m:=m+1;
n:=n+1;

S220          n:=n+1;

S219

S221          OUTPUT m NUMBERS
OF PATH PHASES
Path[0],_,Path[m-1]

FINISH

# FIG. 10

EP 0 951 148 A2

# FIG. 11

START

p:=1;
temp:=PD[0];          S301

S302

YES

p>S

S303          NO

PD[p]>temp          NO

Level[1]:=PD[temp_p];
Phase[1]:=temp_p;
PD[temp_p]:=MARK;
PD[temp_p- 1]:MARK;
PD[temp_p+1]:MARK;          S306

S305

p:=p+1;

YES

temp:=PD[p];
temp_p:=p;
p:=p+1          S804

W= α × Level[1];
Wb:= β × W;          S307

Wf:=W- Wb;
Wstart:=Phase[1]- Wf;
Wend:=Phase[1]- Wb;          S308

P_MAX=table(Level[1]);          S309

n:=2;
temp:=PD[0];
p:=Wstart;          S310

S311          n>P_MAX          YES

NO          S312

p>Wend          YES

NO          S313

PD[p]>temp AND
PD[p] ≠ MARK          NO

YES

temp:=PD[p];
temp_p:=p;
p:=p+1          S314

S315          p:=p+1;

S316          Level[n]:=PD[temp_p];
Phase[n]:=temp_p;
PD[temp_p]:=MARK;
PD[temp_p- 1]:MARK;
PD[temp_p+1]:MARK;

n:=1;
m:=0;          S317

S318          YES

n>PMAX          S319

NO          NO

Level[n]>Pt

YES

Path[m]:=Phase[n];
m:=m+1;
n:=n+1;          S320

S321          n:=n+1;

S322          OUTPUT m NUMBERS
OF PATH PHASES
Path[0],Path[m- 1]

FINISH

# FIG. 12

SPREAD SIGNAL →

| | |
|---|---|
| 201 SPREADING CODE GENERATING SECTION | |
| 202 MATCHED FILTER | |
| 203 DELAY PROFILE DATA AVERAGING SECTION | |
| 401 MINIMUM VALUE DETECTING SECTION | |
| 210 SEARCH WINDOW CONTROL SECTION | |
| 205 PATH SELECTING SECTION | |
| 206 VALID PATH THRESHOLD VALUE SETTING SECTION | |
| 207 VALID PATH DECIDING SECTION | |
| 208 SEARCH WINDOW POSITION SETTING SECTION | |
| 209 SEARCH WINDOW WIDTH SETTING SECTION | |
| 204 MAXIMUM SELECTION PATH NUMBER SETTING SECTION | |

→ PATH PHASE

# FIG. 13

START

p:=1;
temp:=PD[0];
min=PD[0]; — S401

S402 — p>S — YES

NO

S403 — PD[p]>temp — NO

YES

temp:=PD[p];
temp_p=p; — S404

S405 — PD[p]<min — NO — S407

YES                    p:=p+1;

min:=PD[p];
p:=p+1 — S406

Level[1]:=PD[temp_p];
Phase[1]:=temp_p;
PD[temp_p]:=MARK;
PD[temp_p-1]:MARK;
PD[temp_p+1]:MARK; — S408

Wf:=W-Wb;
Wstart:=Phase[1]-Wf;
Wend:=Phase[1]-Wb; — S409

n:=2;
temp:=PD[0];
p:=Wstart; — S410

S411 — n>P_MAX — YES

S412 — NO

S412 — p>Wend — YES

NO

S413 — PD[p]>temp AND
PD[p] ≠ MARK — NO

YES                S415 — p:=p+1;

temp:=PD[p];
temp_p:=p;
p:=p+1 — S414

Level[n]:=PD[temp_p];
Phase[n]:=temp_p;
PD[temp_p]:=MARK;
PD[temp_p-1]:MARK;
PD[temp_p+1]:MARK; — S416

n:=1;
m:=0; — S417

S418 — YES

n>P_MAX — S419

NO

Level[n]>Pt — NO

YES

Path[m]:=Phase[n];
m:=m+1;
n:=n+1; — S420

S421 — n:=n+1;

OUTPUT m NUMBERS
OF PATH PHATH PHASES
Path[0],_,Path[m-1] — S422

FINISH